(19) Europäisches Patentamt
European Patent Office
Office européen des brevets

(11) Numéro de publication: **0 311 795 B1**

# (12) FASCICULE DE BREVET EUROPEEN

(45) Date de publication de fascicule du brevet: **04.12.91**

(51) Int. Cl.[5]: **A23C 21/00**, A23J 3/00

(21) Numéro de dépôt: **88114870.4**

(22) Date de dépôt: **12.09.88**

## (54) Procédé de préparation d'un produit lactosérique à allergénicité réduite.

(30) Priorité: **15.10.87 CH 4041/87**

(43) Date de publication de la demande: **19.04.89 Bulletin 89/16**

(45) Mention de la délivrance du brevet: **04.12.91 Bulletin 91/49**

(84) Etats contractants désignés: **AT BE DE ES FR GB GR IT LU NL SE**

(56) Documents cités:
**EP-A- 0 126 290**

**JOURNAL OF DIARY SCIENCE, vol. 67, no. 5, mai 1984, pages 939-949; O. DE RHAM et al.: "Role of ionic environment in insolubilization of whey protein during heat treatment of whey products"**

**FOOD SCIENCE & TECHNOLOGY ABSTRACTS, vol. 17, no. 1, 1985, pages 152-153; L. HEPPELL et al.: "Reduction in the antigenicity of whey proteins by heat treatment: a possible strategy for producing a hypoallergenic infant milk formula"**

**JOURNAL OF DAIRY SCIENCE, vol. 67, no. 11, novembre 1984, pages 2701-2710; J.N. DE WIT et al.: "Effects of various heat treatments on structure and solubility of whey proteins"**

**JOURNAL OF DIARY SCIENCE, vol. 60, no. 10, 1977, pages 1515-1518; J. HIDALGO et al.: "Solubility and heat stability of whey protein concentrates"**

**JOURNAL OF FOOD SCIENCE, vol. 48, no. 1, janvier-février 1983, pages 47-56; E. LI-CHAN: "Heat-induced changes in the proteins of whey protein concentrate"**

(73) Titulaire: **SOCIETE DES PRODUITS NESTLE S.A.
Case postale 353
CH-1800 Vevey(CH)**

(72) Inventeur: **De Rham, Olivier
Ch. de la Paisible 21
CH-1814 La Tour de Peilz(CH)**

EP 0 311 795 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un procédé de préparation d'un produit lactosérique à allergénicité réduite.

On sait que les phénomènes d'allergies au lait de vache et aux produits industriels, adaptés aux besoins du nourrisson, qui en contiennent sont dûs pour la plupart au fait que les protéines de ce lait et de ces produits diffèrent des protéines du lait maternel. Parmi les protéines du lait de vache les plus allergéniques, on compte notamment la bétalactoglobuline qui représente la fraction pondérale la plus importante des protéines du lactosérum.

On sait en outre que des traitements thermiques équivalant notamment à une stérilisation peuvent réduire l'allergénicité de certaines protéines. Cependant, il règne encore dans ce domaine une certaine incertitude.

L'article d'O. de Rham et al. dans Journal of Dairy Science, vol. 67, No. 5, mai 1984, pages 939-949, est consacré au rôle joué par l'environnement ionique sur l'insolubilisation des protéines du lactosérum. Il enseigne en particulier que le calcium et le magnésium non masqués par du citrate à pH 6,0 ou par du citrate et du phosphate à pH 8,0 provoquent l'insolubilisation des protéines du lactosérum s'ils sont présents en concentrations supérieures à une valeur comprise entre environ - 1 mM/1 et + 5 mM/1 dans un lactosérum déminéralisé, un lactosérum doux ou un rétentat d'ultrafiltration de lactosérum, et que ce produit lactosérique soit chauffé à 95° C durant 5 min.

EP-A-0126290 divulgue un enseignement semblable à celui de l'article ci-dessus tout en en proposant une application pour la préparation d'un produit lactosérique contenant les protéines de lactosérum sous forme stable à la chaleur à des pH compris entre 5,5 et 9,0.

La présente invention a pour but de proposer un procédé de préparation d'un produit lactosérique à allergénicité réduite, utilisable notamment pour la préparation de laits adaptés aux besoins du nourrisson, qui soit à la fois simple et sûr et qui lève l'incertitude relevée ci-dessus.

C'est ainsi que le procédé selon la présente invention est caractérisé par le fait que l'on prépare une solution aqueuse de composants du lactosérum qui comprenne 0,5-5% en poids de protéines, on ajuste son pH à 5,5-8,5, on ajuste sa teneur en Ca libre à 6-15 mmol/1, et on la chauffe à 90-140° C durant 2-10 min, jusqu'à ce qu'elle présente une teneur en béta-lactoglobuline résiduelle allergénique inférieure à 0,1% de sa teneur en bétalactoglobuline initiale.

On a constaté en effet qu'il ne suffit pas de dénaturer une protéine par chauffage pour réduire son allergénicité de manière satisfaisante, mais qu'il faut réaliser cette dénaturation dans des conditions particulières et notamment en présence d'une quantité minimale de Ca libre.

Dans le présent exposé, le terme "allergénicité" est à comprendre comme "activité antigénique susceptible de déclencher des réactions allergiques chez des sujets, notamment des nourrisson sensibles". L'allergénicité du produit obtenu par le présent procédé est estimée de manière quantitative en fonction de la teneur du produit en $\beta$-lactoglobuline antigéniquement active telle que déterminée par le test ELISA. Ce dernier test, bien connu de l'homme du métier, consiste à doser une enzyme marquant un anti-anticorps qui se lie à un anticorps spécifique de la $\beta$-lactoglobuline, qui se lie à cette dernière qui est elle-même fixée sur un support insoluble en milieu aqueux.

On considère, dans le présent exposé, que la teneur en $\beta$-lactoglobuline résiduelle allergénique du produit du procédé selon la présente invention doit être au moins inférieure à 0,1% de sa teneur en $\beta$-lactoglobuline initiale pour que la réduction de l'allergénicité du produit présente un intérêt pratique. En d'autres termes, on considère que le traitement des protéines selon le présent procédé doit permettre de satisfaire au moins cette condition pour que le produit puisse être valablement utilisé dans la préparation d'aliments, notamment de laits adaptés aux besoins du nourrisson, dont la consommation n'entraîne pratiquement aucune sensibilisation du consommateur aux protéines qu'il contient.

L'allergénicité du produit obtenu par le présent procédé est également estimée de manière qualitative sur le modèle du cobaye. On sait en effet que, si les résultats de tels essais ne sont pas directement transposables à l'homme, ils fournissent néanmoins des indications utiles.

L'expression "Ca libre" est à comprendre comme le "Ca qui n'est lié à aucun anion". La teneur en Ca libre de ladite solution aqueuse de composants du lactosérum est déterminée à l'aide d'une électrode spécifique dont la partie sensible au Ca est une membrane contenant un échangeur d'ions capable d'adsorber le Ca libre.

Pour mettre en oeuvre le présent procédé, on peut partir de toute matière première lactosérique contenant les protéines du lactosérum sous forme non dénaturée. Cette matière première peut être un lactosérum de fromagerie, notamment un lactosérum doux tel que celui résultant d'une coagulation de la caséine de type présure ou un lactosérum acide tel que celui résultant d'une coagulation de la caséine de type acide. Cette matière première peut être également un lactosérum déminéralisé par échange d'ions ou électrodialyse p.ex., ou encore un concentré de protéines de lactosérum obtenu par ultrafiltration ou dialyse p.ex. Elle peut se présenter indifféremment sous forme de solution aqueuse, de concentré ou de poudre.

Pour préparer ladite solution aqueuse de composants du lactosérum qui comprenne 0,5-5% en poids de protéines, on peut donc partir d'une matière première telle que décrite ci-dessus et, selon qu'il s'agit d'une poudre, d'un concentré ou d'une solution, la dissoudre dans l'eau distillée, la diluer et/ou ajuster sa teneur en protéines dans les limites indiquées. Si l'on ajuste la teneur en protéines de la solution à une valeur supérieure à 5% en poids, on risque de rencontrer des problèmes de gélification des protéines lors du traitement thermique ultérieur. Un ajustement de la teneur en protéines de la solution à une valeur inférieure à environ 0,5% en poids est possible mais ne présente pas d'avantage particulier. Dans la pratique, on n'a guère de raison d'ajuster la teneur en protéines de la solution à une valeur inférieure à celle que présente le lactosérum lui-même et qui se trouve dans le bas du domaine indiqué.

On peut ajuster le pH de la solution à une valeur comprise entre 5,5 et 8,5 par addition de HCl ou NaOH p. ex. Si l'on ajuste le pH à une valeur inférieure à 5,5, on ne peut pas obtenir le produit escompté. Si l'on ajuste le pH à une valeur supérieure à 8,5, on risque de provoquer l'apparition de goûts indésirables, voire la production de lysinoalanine et/ou une isomérisation des acides aminés.

On peut ajuster la teneur en Ca libre de la solution à 6-15 mmol/l par addition de chlorure, d'hydroxyde ou de lactate de Ca p.ex. On l'ajuste de préférence par addition de $CaCl_2$. Si l'on ajuste la teneur en Ca libre de la solution à une valeur inférieure à 6 mmol/l, on risque de ne pas pouvoir réduire suffisamment l'allergénicité du présent produit lactosérique. Par contre, on préfère ajuster la teneur en Ca libre à une valeur inférieure à 15 mmol/l pour des raisons pratiques, en d'autres termes pour des raisons liées à la teneur en Ca que ne devrait pas dépasser le produit final à la préparation duquel le présent produit lactosérique est destiné. Un tel produit final peut être par exemple un lait en poudre adapté aux besoins du nourrisson que l'on peut préparer notamment par mélange du présent produit lactosérique déshydraté avec une matière grasse végétale adéquate et standardisation de la teneur du mélange en lactose, en éléments minéraux et en vitamines.

On peut chauffer la solution à 90-140° C durant 2-10 min dans un échangeur de chaleur, en autoclave ou par injection de vapeur p.ex. Afin d'obtenir la réduction désirée de l'allergénicité, on chauffe donc la solution durant quelques min aux températures indiquées, environ 2 min étant suffisantes à environ 130-140° C et environ 10 min étant suffisantes à environ 90-100° C. Des températures inférieures à 90° C ne permettent pas d'obtenir la réduction désirée de l'allergénicité en des temps raisonnables. Des températures supérieures à 140° C risquent de provoquer une augmentation sensible des réactions de Maillard.

Comme indiqué plus haut, le produit obtenu par le procédé selon la présente invention est un produit intermédiaire destiné de préférence à la préparation de laits adaptés aux besoins du nourrisson. Lorsque tel est effectivement l'usage prévu du présent produit, on peut utiliser de préférence comme matière première pour sa préparation un lactosérum doux déminéralisé, soit partiellement ultrafiltré, soit enrichi en protéines de lactosérum obtenues par ultrafiltration de sorte que sa teneur en protéines soit de environ 17% en poids de matière sèche et que la teneur en protéines du produit final puisse être ensuite de environ 12% en poids de matière sèche après addition de matière grasse végétale.

Les exemples ci-après sont présentés à tire d'illustration du procédé selon la présente invention. Les pourcentages y sont donnés en poids. La teneur en Ca libre est mesurée à l'aide d'une électrode spécifique telle que décrite ci-dessus. La teneur en β-lactoglobuline résiduelle allergénique est déterminée par le test ELISA commenté ci-dessus et elle est exprimée en pourcents de la teneur en β-lactoglobuline initiale.

## Exemple 1

On ultrafiltre un lactosérum doux jusqu'à ce que la teneur en protéines de la matière sèche du rétentat soit de 80%.

On prépare une solution aqueuse à 1,25% de ce rétentat en le diluant dans l'eau distillée. Cette solution présente une teneur en protéines de 1%, une teneur en Ca total de 2,6 mmol/l et une teneur en Ca libre de 1,7 mmol/l. On ajuste son pH à 7,8 par addition de NaOH. On ajuste sa teneur en Ca libre à 9,5 mmol/l par addition de 7,8 mmol/l de $CaCl_2$.

On chauffe la solution à 100° C durant 10 min par injection de vapeur. Après ce traitement, la solution présente une teneur en β-lactoglobuline résiduelle allergénique égale à 0,02% de sa teneur en β-lactoglobuline initiale.

Par contre si, pour comparaison, on chauffe la solution à 100° C durant 10 min sans avoir ajusté au préalable sa teneur en Ca libre, autrement dit sans avoir ajouté les 7,8 mmol/l de $CaCl_2$, elle présente après ce chauffage une teneur en β-lactoglobuline résiduelle allergénique égale à 9% de sa teneur en β-lactoglobuline initiale. Cette teneur résiduelle est encore beaucoup trop élevée.

## Exemple 2

On déminéralise un lactosérum doux en le faisant passer sur un échangeur de cations puis sur un échangeur d'anions. On l'ultrafiltre jusqu'à ce que la solution formée par le rétentat présente une teneur en matière sèche de 10% dont 1,7% de protéines. Les teneurs respectives en Ca total et en Ca libre de cette solution sont de 1,3 et 0,9 mmol/l.

On ajuste le pH de cette solution à 6,7 par addition de NaOH. On ajuste sa teneur en Ca libre à 6 mmol/l par addition de 5,1 mmol/l de $CaCl_2$. On chauffe la solution à 95°C durant 10 min par injection de vapeur. Après ce traitement, la solution présente une teneur en $\beta$-lactoglobuline résiduelle allergénique égale à 0,05% de sa teneur en $\beta$-lactoglobuline initiale.
Par contre si, pour comparaison, on n'ajoute aucun $CaCl_2$ ou que l'on n'ajoute que 3,5 mmol/l de $CaCl_2$ à la solution, celle-ci présente après un chauffage semblable une teneur en $\beta$-lactoglobuline résiduelle allergénique de 18% dans le premier cas et de 13% dans le second cas , en % de sa teneur en $\beta$-lactoglobuline initiale.

Exemple 3

On déminéralise un lactosérum doux en le faisant passer sur un échangeur d'anions puis sur un échangeur de cations. On ajuste sa teneur en matière sèche à 10%. On y ajoute 0,8% de protéines de lactosérum obtenues par ultrafiltration et présentant une pureté de 80%. On obtient ainsi une solution à 10,8% de matière sèche qui présente une teneur en protéines de 1,8% et des teneurs respectives en Ca total et en Ca libre de 2,5 et 1,7 mmol/l.

On ajuste le pH de cette solution à 6,35 par addition de NaOH. On ajuste sa teneur en Ca libre à 13 mmol/l par addition de 11,3 mmol/l de $CaCl_2$. On porte la température de cette solution à 95°C par injection de vapeur. On maintient la solution à 95°C en cuve d'attente durant 10 min puis on la refroidit brusquement. Après ce traitement, la solution présente une teneur en $\beta$-lactoglobuline résiduelle allergénique égale à 0,05% de sa teneur en $\beta$-lactoglobuline initiale.

Exemple 4

On utilise le produit lactosérique obtenu à l'exemple 3 pour nourrir huit cobayes et tenter de les rendre allergiques aux protéines qu'il contient. On vérifie le résultat de cet essai de sensibilisation en faisant à chaque cobaye une injection intraveineuse de protéines de lactosérum obtenues par ultrafiltration et non traitées selon le présent procédé. Après ces injections, deux des huit cobayes présentent des symptômes d'allergie non létaux et six ne présentent aucun symptôme d'allergie.

En d'autres termes, cet essai de sensibilisation des cobayes aux protéines du lactosérum n'a pratiquement abouti à aucune sensibilisation importante parce que l'allergénicité de ces protéines avait été pratiquement réduite à zéro par la mise en oeuvre du présent procédé.

Exemple 5

On nourrit six cobayes avec des protéines de lactosérum obtenues par ultrafiltration et non traitées selon le présent procédé, pour rendre les cobayes allergiques à ces protéines. On fait ensuite à chaque cobaye une injection intraveineuse du produit lactosérique obtenu à l'exemple 3. Après ces injections, deux des six cobayes présentent des symptômes d'allergie non létaux et quatre ne présentent aucun symptôme d'allergie.

En d'autres termes, même si les cobayes ont été rendus allergiques aux protéines du lactosérum, les protéines du présent produit n'ont pas pu produire un choc anaphylactique parce que leur allergénicité a été pratiquement réduite à zéro par la mise en oeuvre du présent procédé.

Exemple comparatif

On fait encore à chaque cobaye de l'exemple 5 une injection intraveineuse de protéines obtenues par ultrafiltration et non traitées selon le présent procédé. Tous ces cobayes succombent à un choc anaphylactique.

Cet exemple met en évidence par comparaison avec les exemples 4 et 5 ci-dessus l'efficacité remarquable du présent procédé en ce qui concerne la réduction de l'allergénicité des protéines du lactosérum telle qu'elle peut être testée sur le modèle des cobayes.

## Revendications

1. Procédé de préparation d'un produit lactosérique à allergénicité réduite, caractérisé par le fait que l'on prépare une solution aqueuse de composants du lactosérum qui comprenne 0,5-5% en poids de protéines, on ajuste son pH à 5,5-8,5, on ajuste sa teneur en Ca libre à 6-15 mmol/l, et on la chauffe à 90-140°C durant 2-10 min, jusqu'à ce qu'elle présente une teneur en $\beta$-lactoglobuline résiduelle allergénique inférieure à 0,1 % de sa teneur en $\beta$-lactoglobuline initiale.

2. Procédé selon la revendication 1, caractérisé par le fait que l'on ajuste la teneur en Ca libre de ladite solution par addition de $CaCl_2$.

## Claims

1. A process for the preparation of a whey product of reduced allergenicity, characterized in that it comprises the steps of preparing an aqueous solution of whey components which contains 0.5 - 5% by weight proteins, adjusting its pH to 5.5 - 8.5, adjusting its free Ca content to 6 - 15 mmol/1, and heating it for 2 - 10 minutes at 90 - 140 °C until it has a residual allergenic $\beta$-lactoglobulin content of less than 0.1% of its initial $\beta$-lactoglobulin content.

2. A process as claimed in claim 1, characterized in that the free Ca content of the said solution is adjusted by addition of $CaCl_2$.

**Patentansprüche**

1. Verfahren zur Herstellung eines Molkeproduktes mit verringerter Allergenität, dadurch gekennzeichnet, daß man eine wäßrige Lösung der Molkebestandteile herstellt, welche 0,5 bis 5 Gew.-% Proteine enthält, ihren pH-Wert auf 5,5-8,5 einstellt, ihren Gehalt an freiem Ca auf 6-15 mMol/1 einstellt und die Lösung während 2-10 min auf 90-140° C erhitzt, bis sie einen Gehalt an verbleibendem, die Allergie hervorrufendem $\beta$-Lactoglobulin von unter 0,1 % ihres ursprünglichen Gehaltes an $\beta$-Lactoglobulin aufweist.

2. Verfahren nach Anspruch 1, dadurch gekennzeichnet, daß man den Gehalt an freiem Ca der genannten Lösung durch Zugabe von $CaCl_2$ einstellt.